# EUROPÄISCHE PATENTANMELDUNG

(11) **EP 1 043 119 A2**
(43) Veröffentlichungstag der Anmeldung: **11.10.2000**
(21) Anmeldenummer: 00105687.8
(22) Anmeldetag: 17.03.2000
(51) Int. Cl.: B24B 5/04, B24B 41/06, B23Q 3/06

(54) **Verfahren und Vorrichtung zum Aussenrundschleifen dünnwandiger Rohre**

(30) Priorität: 03.04.1999 DE 19915224
(71) Anmelder: Küsters Beloit GmbH & Co. KG, 47805 Krefeld (DE)
(72) Erfinder: Küsters, Karl-Heinz, 47804 Krefeld (DE)
(74) Vertreter: Palgen, Peter, Dipl.-Phys. Dr.

(57) **Zusammenfassung**

Zum Außenrundschleifen eines dünnwandigen Rohres größeren Durchmessers, insbesondere eines Walzenrohres, dient ein äußeres Schleifwerkzeug (20) in Gestalt einer umlaufenden Schleifscheibe (3), die an einer Schleifstelle (8) mit einem bestimmten Schleifdruck gegen den Außenumfang des Rohres (10) anliegt. Um zu verhindern, daß das Rohr (10), das wegen seiner Dünnwandigkeit elastisch verformbar ist, dem Schleifdruck ausweicht, ist im Inneren des Rohres (10) an der Schleifstelle (8) eine feststehende Abstützung (15) vorgesehen.

## Beschreibung

Das Problem der Erfindung tritt insbesondere bei Walzenrohren für durchbiegungssteuerbare Walzen neuerer Bauart mit Stützstempeln auf Bei diesen Walzen ist eine umlaufende Hohlwalze (Rohr) von einem undrehbaren Querhaupt durchgriffen, an welchem eine gegen den Innenumfang der Hohlwalze wirkende, meist hydraulische Stützeinrichtung vorgesehen ist, auf der sich die Hohlwalze an dem Querhaupt gegen die Linienkraft im Walzspalt abstützt. Das Grundprinzip derartiger Walzen ist in der DE 22 30 139 wiedergegeben. Diese Konstruktion ist im Laufe der Jahrzehnte vielfach verfeinert worden und zwar insbesondere in Richtung auf die genaue Einstellung eines vorgegebenen Linienkraftprofils im Walzspalt. Die früheren durchbiegungssteuerbaren Walzen hatten eine Hohlwalze aus Stahl mit einer erheblichen Formsteifigkeit, die das von der Reihe der Stützstempel im Inneren gegen den Innenumfang der Hohlwalze ausgeübte Kraftprofil weitgehend glättete und veränderte, so daß das längs des Walzspalts sich einstellende Linienkraftprofil auf verwickelte Weise gegenüber dem Kraftprofil der Stützelemente verfremdet war.

Im Laufe der Zeit wurde versucht, diesen Einfluß der Formsteifigkeit der Hohlwalzen zurückzudrängen, indem die Wandstärke derselben verringert oder sogar statt der stählernden Hohlwalzen solche aus verstärkten Kunststoffen eingesetzt wurden, wie es sich aus der EP 720 698 oder der DE 41 03 799 ergibt.

Die dünnwandigen und gegebenenfalls auch noch aus Kunststoff bestehenden Walzenrohre stellen Gebilde von etwa 30 bis 100 cm Durchmesser und Längen von 5 m und mehr dar, die ungeachtet ihrer geringen Formsteifigkeit erheblichen Anforderungen an die Qualität der Oberfläche und insbesondere an die in Umfangsrichtung und in Längsrichtung gleichbleibende Wandstärke genügen müssen. Abweichungen in der Wandstärke in Umfangsrichtung führen, da die Kräfte zur Bildung der Linienkraft durch die Stützstempel von innen aufgebracht werden, zu periodischen Linienkraftschwankungen, die sich in entsprechenden periodischen Eigenschaftsschwankungen der behandelten Bahn widerspiegeln und entsprechend zu vermeiden sind.

Wenn es sich um Kunststoffrohre handelt, sind sie mit gewickelten Faserverstärkungen versehen, auf die eine äußere Kunststoffschicht aufgebracht wird, die bei ihrer Herstellung nicht von selbst eine ausreichende Präzision aufweist, was zu radialen Dickenschwankungen führt. Ein Schleifvorgang für die äußere Oberfläche ist also erforderlich.

Dies gilt nicht nur für die Erstellung der Walze bzw. des Walzenrohres, sondern auch und in noch größerem Umfang für die Wiederherstellung des Walzenrohres, die von Zeit zu Zeit wegen der im Betrieb auftretenden Beschädigungen der Walzenoberfläche erfolgen muß.

Der Erfindung liegt die Aufgabe zugrunde, den Schleifvorgang des Rohres zu verbessern.

Diese Aufgabe wird durch die in ihrem allgemeinen verfahrensmäßigen Aspekt in Anspruch 1 wiedergegebene Erfindung gelöst.

Durch die Erfindung wird das Rohr bei seiner Drehung zwischen zwei feststehenden und ihrem gegenseitigen Abstand festen, einen starren Spalt bildenden Elementen hindurchgeführt, nämlich der Abstützung und dem Schleifwerkzeug. Das Rohr muß den Schleifdruck nicht aufgrund seiner Formsteifigkeit aushalten, sondern wird ganz unabhängig von seiner Form im Großen an der Schleifstelle von der Abstützung unnachgiebig von innen direkt gegen den Schleifdruck gestützt, so daß sich einen präzise Wandstärke auch dann einstellt, wenn das Rohr im Großen beim Schleifen etwas elliptisch verformt sein sollte. Die Wandstärke wird gewissermaßen in dem Spalt zwischen der Abstützung und dem Schleifwerkzeug kalibriert und der Schleifvorgang im Sinne einer größeren Präzision des geschliffenen Rohres verbessert.

Die Wanddickentoleranz in Längsrichtung kann durch die Verfahrensweise nach Anspruch 2 vermindert werden, weil die durch den festen Abstand zwischen Abstützung und Schleifwerkzeug sich ergebende Präzision auch über die Länge des Rohres erzeugt werden kann.

Bei dieser Version braucht die Abstützung zwar nur eine axiale Erstreckung ähnlich der des Schleifwerkzeugs aufzuweisen, doch erfordert sie einen Träger für die Abstützung von mindestens der doppelten Länge des Rohres, wenn dieses während des Schleifvorgangs in Längsrichtung über seine gesamte Länge verlagert wird, was bei längeren Rohren vom Platzbedarf und vom gesamten Aufwand her ersichtlich eine Erschwernis ist, so daß diese prinzipiell an sich mögliche Ausführungsform Sonderfällen mit relativ kurzen Rohren vorbehalten sein wird, für das Schleifen von Walzenrohren von 5 bis 10 Meter Länge aber weniger in Betracht kommt.

Die wichtigere Ausführungsform wird vielmehr die nach Anspruch 3 sein, die auch den eigentlichen Ausgangspunkt der Erfindung gebildet hat. Es geht hierbei um die Herrichtung einer durchbiegungssteuerbaren Walze, bei der das Schleifwerkzeug entlang der Walze bewegt wird und der Träger für die Abstützung nur so lang sein muß wie das Rohr bzw. Walzenrohr selbst und durch das Querhaupt der Walze gebildet sein kann. Es kann hierbei eine fertige Walze ohne Demontage außen geschliffen werden.

Um ein Pendeln des Rohres beim Schleifen um die Anlagelinie an der Abstützung zu vermeiden und ihm einen ruhigen Lauf zu verleihen, kann das Rohr gemäß Anspruch 4 beim Schleifen gegen die Abstützung angezogen werden.

Bei der bevorzugten Ausführungsform nach Anspruch 5 kann dies dadurch realisiert werden, daß zum Anziehen des Walzenrohres gegen die Abstützung die gleiche Stützeinrichtung verwendet wird, mittels derer das Walzenrohr im Betrieb der Walze gegen die Linienkraft abgestützt wird und die um 180° in Umfangsrichtung gegenüber der Abstützung versetzt angeordnet ist.

Die Stützeinrichtung wird also beim Schleifen in Betrieb gesetzt und verlagert das Walzenrohr, da keine den Hub des Walzenrohres begrenzende Gegenwalze vorhanden ist, bis zur Anlage an einem anderweitigen Anschlag, der durch die Abstützung gebildet ist.

Eine alternative Ausführungsform ist Gegenstand des Anspruchs 6. Hier ist eine eigens für das Anziehen gegen die Abstützung vorgesehene Kraftausübungseinrichtung vorgesehen, die separat von der Stützeinrichtung vorhanden ist. Die Kraftausübungseinrichtung ist um 180° in Umfangsrichtung gegenüber der Abstützung versetzt, während die Stützeinrichtung, mittels derer das Walzenrohr im Betrieb der Walze gegen die Linienkraft abgestützt wird, um einen von 180° verschiedenen Winkel gegenüber der Abstützung in Umfangsrichtung versetzt ist.

In ihrem vorrichtungsmäßigen Aspekt ist die Erfindung in Anspruch 7 wiedergegeben.

Die Abstützung kann gemäß Anspruch 8 an einem das Rohr der Länge nach durchgreifenden Träger in Gestalt eines undrehbaren Querhauptes angeordnet sein, welches an den Enden aus dem Rohr hervorschaut und dort im Maschinengestell fest abgestützt ist, in welchem auch das umlaufende Schleifwerkzeug gelagert ist.

Die schon erwähnte aufwendigere Ausführung mit langem Querhaupt ist in ihrem vorrichtungsmäßigen Aspekt Gegenstand von Anspruch 9.

Um das Rohr der Länge nach beim Schleifvorgang zwischen Schleifwerkzeug und Abstützung hindurchzuführen, empfiehlt sich ein entsprechender Antrieb des Rohres in Längsrichtung, der ziehend oder schiebend arbeiten kann. Da das Rohr hierbei an der Abstützung in Längsrichtung vorbeigeführt wird, braucht die Abstützung in diesem Fall nur etwa so lang zu sein wie es der Arbeitsbreite des Schleifwerkzeugs entspricht.
Die in der praktischen Anwendung bedeutsamere Ausführungsform nach den Ansprüchen 7 und 10 läßt beim Schleifen das Rohr in seiner Längsrichtung stehen, und weist dafür eine sich über die Länge des Rohres erstreckende Abstützung gegen die Kraft des außen vorbei verlagerten Schleifwerkzeugs auf.

Anspruch 11 ist auf das bevorzugte Ausführungsbeispiel der Bearbeitung einer fertigen Walze in einer einer üblichen Schleifbank für Walzen ähnlichen Anordnung gerichtet.

Die Erfindung verkörpert sich nicht nur in der Schleifvorrichtung, sondern auch in einer mit einer entsprechenden Zusatzausgestaltung versehenen durchbiegungssteuerbaren Walze nach Anspruch 12. Beispiele für in Betracht kommende Konstruktionen von durchbiegungssteuerbaren Walzen finden sich außer in der bereits erwähnten DE 22 30 139 in der DE 22 54 392, der DE 38 20 974, der US 2 395 915 oder der DE 14 61 066.

Die nachfolgend erwähnten Ausgestaltungsmerkmale sind für beide Aspekte der Erfindung relevant.

Die Abstützung gegen den Schleifdruck kann durch ein an dem Querhaupt angeordnetes Gleitstück (Anspruch 13) oder durch mindestens eine an dem Querhaupt angeordnete Anordnung um eine zur Rohrachse parallele Achse umlaufender Rollen gebildet sein (Anspruch 14), an denen der Innenumfang des Rohres bei dessen Drehung vorbeigleitet bzw. rollend abgestützt anliegen und durch die das Rohr an der Schleifstelle von innen hinterlagert ist.

Eine für die praktische Durchführung des erfindungsgemäßen Schleifverfahrens wichtige Ausgestaltung ist Gegenstand des Anspruchs 15.

Um das Rohr beim Schleifen zu stabilisieren und einem Pendeln um eine achsparallele Achse um die Schieifstelle vorzubeugen, ist zweckmäßig auf der der Abstützung gegenüberliegenden Seite des Querhauptes eine gegen den Innenumfang des Rohres wirkende Kraftausübungseinrichtung vorgesehen, welche das Rohr leicht gegen die Abstützung zieht und somit für eine Anlage des Rohres an zwei einander bezüglich des Rohrquerschnitts diametral gegenüberliegenden Stützstellen sorgt.

Die Kraftausübungseinrichtung kann durch ein fluides Druckmedium betätigbar (Anspruch 16) und mindestens einen hydrostatischen Stützstempel umfassen, der gegen den Innenumfang des Rohres wirkt (Anspruch 17).

Bei der bevorzugten Ausführungsform der Erfindung, bei der das Walzenrohr eine betriebsfertig montierten durchbiegungssteuerbaren Walze geschliffen wird, ist vorzugsweise die Kraftausübungseinrichtung durch die gleiche Stützeinrichtung gebildet, mittels derer das Walzenrohr im Betrieb der Walze gegen die Linienkraft abgestützt wird und die um 180° in Umfangsrichtung gegenüber der Abstützung versetzt angeordnet ist (Anspruch 18).

Die durchbiegungssteuerbare Walze kann also einen "inneren Hub einer gewissen Größe ausführen, d. h. das Walzenrohr gegenüber dem Querhaupt quer zur Achse parallel zu sich selbst um eine entsprechende Strecke verlagern, wobei die Bemessung so getroffen ist, daß das Walzenrohr beim Ausfahren der Stützeinrichtung an der gegenüberliegenden Abstützung zur Anlage kommt, während andererseits im Betrieb bei eingefahrener Stützeinrichtung das unter Last durchgebogene Querhaupt mit der Abstützung nicht am Innenumfang der Hohlwalze zur Anlage kommt (Anspruch 19).

An der durchbiegungssteuerbaren Walze muß also lediglich eine zu einem entsprechend bemessenen Hub befähigte Stützeinrichtung und auf der gegenüberliegenden Seite die Abstützung in Gestalt einer Gleitleiste oder dergleichen vorhanden sein, um das Außenrundschleifen des Walzenmantels bei montierter und ansonsten betriebsfähiger Walze zu ermöglichen.

Eine alternative Ausführungsform ist Gegenstand des Anspruchs 20.

Hierbei ist eine separate Kraftausübungseinrichtung vorgesehen, die der Abstützung um 180° in Umfangsrichtung versetzt gegenüberliegt, neben der aber die eigentliche Stützeinrichtung z. B. unter einem Winkel von 90° zusätzlich vorhanden ist. Es werden hierbei zwar an den Hub der Stützeinrichtung nur die normalen Anforderungen gestellt, doch bringt die zusätzliche Kraftausübungseinrichtung einen zusätzlichen Aufwand mit sich, obwohl sie nur relativ geringe Kräfte aufbringen muß, die lediglich zur Erzielung einer festen Anlage an der Abstützung ausreichen, aber wesentlich geringer sind als die Stützkräfte der eigentlichen Stützeinrichtung.

Eine in Betracht kommende einfache Lösung für den Antrieb des Walzenrohres beim Schleifen ist ein Riemenantrieb gemäß Anspruch 21.

In der Zeichnung ist ein Ausführungsbeispiel der Erfindung dargestellt.
Fig. 1 zeigt einen Querschnitt durch die Walze und das Schleifwerkzeug;
Fig. 2 zeigt eine Seitenansicht der Schleifvorrichtung;
Fig. 3 zeigt eine Ansicht gemäß Fig. 2 von rechts;
Fig. 4 zeigt schematisch ein weiteres Ausführunsbeispiel der Erfindung.

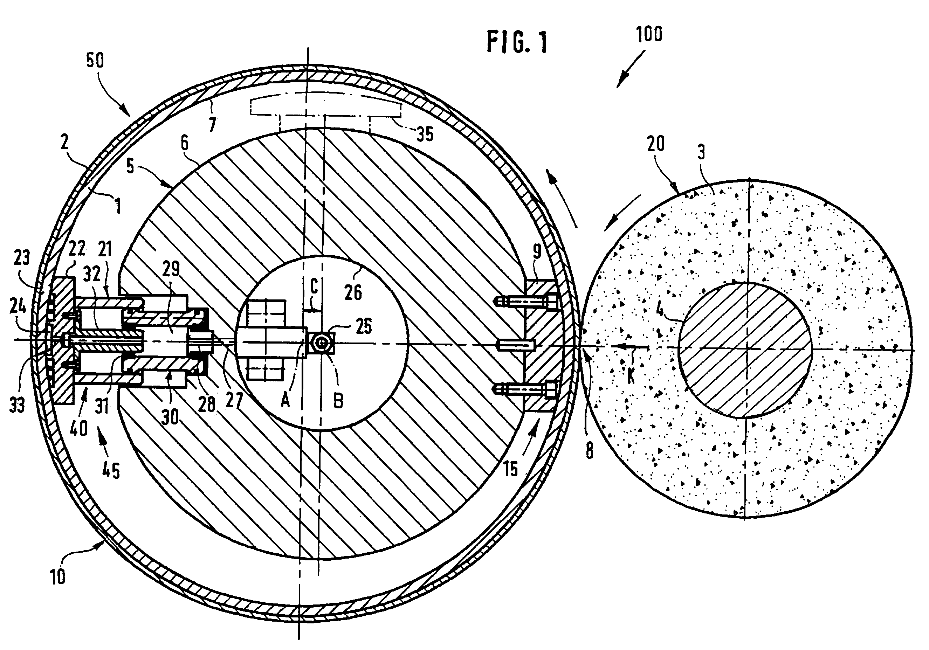

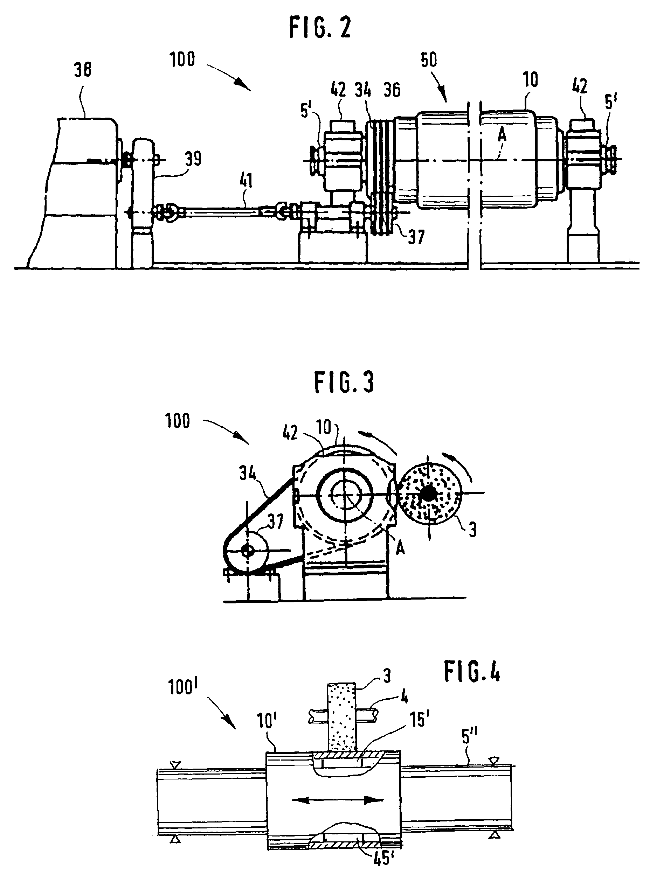

Fig. 1 zeigt im Querschnitt eine als Ganzes mit 100 bezeichnete Schleifvorrichtung zum Schleifen des Außenumfangs eines dünnwandigen Rohres, in dem Ausführungsbeispiel des dünnwandigen Walzenrohres 10 einer durchbiegungssteuerbaren Walze 50, welches aus einem inneren Rohrteil 1 aus einem faserverstärkten Kunststoff besteht, auf welchen außen eine Beschichtung 2 aufgebracht ist, die den arbeitenden Walzenumfang bildet und ihrerseits aus einem geeigneten homogenen Kunststoff besteht. Das Walzenrohr 10 hat in dem Ausführungsbeispiel etwa 50 cm Durchmesser. Die Wandstärke beträgt etwa 15 mm, so daß das Walzenrohr 10 - verglichen mit einem üblichen Walzenmantel aus Stahl - eine geringe Formsteifigkeit aufweist und bei einer normalen Aufspannung ohne besondere Hilfsmittel dem von der das Schleifwerkzeug 20 bildenden Schleifscheibe 3 ausgeübten Schleifdruck, d. h. der Kraft K, elastisch gemäß der Zeichnung nach links ausweichen würde. Die Schleifscheibe 3 sitzt auf einer Schleifspindel 4 und läuft im Pfeilsinne mit einer geeigneten Geschwindigkeit um. Auch das Walzenrohr 10 dreht sich in Umfangsrichtung mit einer geeigneten Vorschubgeschwindigkeit in Pfeilrichtung. Der Antrieb des Walzenrohres 10 kann beispielsweise über einen Riemen 34 erfolgen, der um den Außenumfang eines Endes 36 des Walzenrohres 10 geschlungen ist und über eine Riemenscheibe 37 angetrieben ist, das von einem Motor 38 über ein Vorgelege 39 und eine Antriebswelle 41 in Drehung versetzt wird (Fig. 2, 3)

Durch das Walzenrohr 10 erstreckt sich der Länge nach ein Querhaupt 5 hindurch, welches an seinen aus dem Walzenrohr 10 gemäß Fig. 1 senkrecht zur Zeichenebene hervorstehenden Enden 5', 5' (Fig. 2, 3) feststehend in einem Maschinengestell gelaged ist, welches auch der Lagerung der Schleifscheibe 3 dient und Ständer 42 zur Aufnahme der Enden 5', 5' umfaßt.

Es sind zwei verschiedene Fälle zu unterscheiden, die beide die Erfindung verwirklichen. In dem ersten Fall der Schleifvorrichtung 100' gemäß Fig. 4 hat das Querhaupt 5'' mindestens die doppelte Länge des Rohres 10' und wird das Rohr 10' über seine Länge entlang des Querhauptes 5'' beim Schleifen in Pfeilrichtung bewegt, während sowohl das Querhaupt 5'' als auch die Schleifscheibe 3 in Achsrichtung feststehen. Die Länge der Abstützung 15' und der Kraftausübungseinrichtung 25' in Längsrichtung des Rohres 10 braucht in diesem Fall nur im wesentlichen der Wirkungsbreite der Schleifscheibe 3 zu entsprechen.

In dem zweiten, in der Praxis wesentlich wichtigeren Fall der Schleifvorrichtung 100 der Fig. 1 bis 3 ist das Querhaupt 5 nur wenig länger als das Rohr 10 und wird die Schleifscheibe 3 beim Schleifen entlang des Rohres 10 auf einen nicht dargestellten Support bewegt, während das Rohr 10 und das Querhaupt 5 in Achsrichtung feststehen. Diese Ausführungsform ist bevorzugt, weil sie das Schleifen von durchbiegungssteuerbaren Walzen 50 in betriebsbereitem Zustand ermöglicht. Das normale Querhaupt 5 der durchbiegungssteuerbaren Walze 50, welches an den Enden 5', 5' aus dem Walzenrohr 10 hervorsteht, dient hierbei gleichzeitig als Träger der noch zu beschreibenden inneren Abstützung 15 beim Schleifen.

Das Querhaupt 5 füllt bei der durchbiegungssteurbaren Walze 50 den lichten Querschnitt des Walzenrohres 10 weitgehend aus, so daß es eine erhebliche Biegesteifigkeit an den Tag legt, und beläßt mit seinem Außenumfang 6 ringsum Abstand zum Innenumfang 7 des Walzenrohres 10, so daß es bei unter den Querkräften im Betrieb und auch beim Schleifen zustandekommenden Durchbiegungen nicht an den Innenumfang 7 anstößt.

An der der Schleifstelle 8 auf der Innenseite des Rohres 10 benachbarten Stelle ist an dem Querhaupt 5 ein Gleitstück in Gestalt einer über die Länge des Walzenrohres 10 sich erstreckenden Gleitleiste 9 angeschraubt, deren Gleitfläche bis auf einen Einzugsspalt für das Schmieröl dem Innenumfang 7 des Rohres 10 in seiner Gestalt angepaßt ist und an der das Walzenrohr 10 bei seinem Umlauf vorbeigleitet. Die Gleitleiste 9 stellt also eine feste Hinterlagerung bzw. Abstützung 15 des Rohres 10 an der Schleifstelle 8 dar, die das Walzenrohr 10 von innen gegen den von der Schleifscheibe 3 von außen ausgeübten Schleifdruck, d. h. die Kraft K abstützt. Die Schleifscheibe 3 soll formsteif sein, also zum Beispiel keramisch oder kunststoffgebunden sein. Der Ausdruck "formsteif" soll zum Beispiel Schleifbänder ausschließen, die keine Kalibrierung an der Schleifstelle 8 ermöglichen.

Das Walzenrohr 10 wird also bei seinem Umlauf während des Schleifvorgangs zwischen zwei festen Gegenflächen hindurch geführt und auf eine bestimmte Dicke kalibriert, ohne daß es darauf ankommt, ob das Walzenrohr 10 außerhalb der Schleifstelle 8 exakt kreisförmig oder etwa ein wenig elliptisch verformt ist.

Um das Walzenrohr 10 daran zu hindern, um die Schleifstelle 8 gemäß Fig. 1 nach oben und unten zu pendeln, ist an dem Querhaupt 5 auf der der Abstützung 15 gegenüberliegenden Seite eine Kraftausübungseinrichtung 45 mit einer achsparallelen Reihe von hydrostatischen Stützstempeln 40 vorgesehen, der gegen den Innenumfang 7 des Walzenrohres 10 wirken und dieses gegen die Abstützung 15 ziehen, um eine definierte Anlage an zwei einander bezüglich des Walzenrohres 10 diametral gegenüberliegenden Stellen und damit eine Stabilisierung um die Schleifstelle 8 zu bewirken.

Der einzelne Stützstempel 40 umfaßt einen hohlzylindrischen Teil 21, an dessen bezüglich des Walzenrohres 10 radial äußerem Ende ein über die Länge des Walzenrohres 10 durchgehender, allen Stützstempeln 40 gemeinsamer Lagerschuh 22 oder mehrere hintereinander angeordnete Lagerschuhe jeweils für eine Gruppe von Stützstempeln mit einer äußeren Gleitfläche 23 angebracht ist, die dem Innenumfang 7 des Rohres 10 entsprechend gestaltet ist und eine über die Länge durchgehende Lagertasche 24 aufweist, die mit Druckflüssigkeit versorgt werden können oder mehrere einzelne in Längsrichtung des Lagerschuhs aufeinanderfolgenden Lagertaschen. Die Druckflüssigkeit bildet ein hydrostatisches Druckkissen. Die Druckflüssigkeit strömt aus der Lagertasche 24 ständig über deren Berandungen nach außen ab und bildet dort einen tragfähigen Film, so daß eine unmittelbare metallische Berührung zwischen dem Lagerschuh 22 und dem Walzenrohr 10 bzw. eine Berührung Metall/Kunststoff, wenn das Rohrinnenteil 1 aus Kunststoff besteht, vermieden werden. Die Druckflüssigkeit für die Lagertasche 24 wird durch eine Zuleitung 25 herangeführt, die sich durch die zentrale Bohrung 26 des Querhauptes 5 der Länge nach hindurch erstreckt. Die Zuleitung 25 steht über Kanäle 27, 28 mit dem Innern 29 einer leicht taumelfähig in dem Querhaupt 5 und am Innenumfang des zylindrischen Teils 21 geführten Verbindungsbüchse 30 in Verbindung. An dem gemäß der Zeichnung oberen Ende der Verbindungsbüchse 30 ist eine Ringdichtung 31 vorgesehen, durch die ein rohrartiger Ansatz 32 des Lagerschuhs 22 in das Innere 29 eingreift. Der rohrartige Ansatz 32 steht über einen Kanal 33 des Lagerschuhs 22 mit der Lagertasche 24 in Verbindung. Durch den geschilderten Aufbau kann sich der Lagerschuh 22 gegenüber dem Querhaupt 5 über eine relativ große Strecke unter Aufrechterhaltung einer flüssigkeitsdichten Verbindung zwischen der Zuführung 25 und der Lagertasche 24 verlagern, um eine zur Erreichung der Anlage an der Abstützung 15 ausreichende Verlagerungsstrecke zu erzielen und um auf der Vorrichtung 100 Walzenrohre 10 unterschiedlichen Durchmessers verarbeiten zu können.

Bei der praktisch wichtigeren Ausführungsform der Schleifvorrichtung 100 zum Außenrundschleifen einer betriebsbereiten durchbiegungssteuerbaren Walze 50 gehören die Ständer 42 zur drehfesten Aufnahme des Querhauptes 5 zu einer üblichen Schleifbank, die einen nicht dargestellten, seitlich entlang des Walzenrohres 10 parallel zu dessen Achse A verlagerbaren Support aufweist, auf dem die Schleifscheibe 3 mit ihrem Antrieb gelagert ist. Die Abstützung 15 und der Wirkbereich der Kraftausübungseinrichtung 45 erstrecken sich hierbei über die ganze Länge des Walzenrohres 10. Die Kraftausübungseinrichtung 45 kann aus mehreren in Richtung der Achse A aufgereihtem einzelnen Stützelementen 40 gegebenenfalls mit einer durchgehenden Stützleiste 22 bestehen.

Bei der bevorzugten Ausführungsform der Erfindung ist das Kraftausübungselement 45 identisch mit der Stützeinrichtung, die im normalen Betrieb der Walze 50 für die Aufbringung der Linienkraft sorgt. Es muß also in diesem Fall keine gesonderte Kraftausübungseinrichtung vorgesehen sein. Die in diesem Fall einzusetzende Kraftausübungseinrichtung 45 ist mit dem hohlzylindrischen Teil 21 und der Verbindungsbüchse 30 lediglich besonders gestaltet, um den geforderten vergrößerten Hub zustande zu bringen.

Alternativ kann aber auch vorgesehen sein, daß die Kraftausübungseinrichtung nicht mit der Stützeinrichtung identisch ist, sondern diese separat vorhanden ist, wie es durch die strichpunktiert angedeutete, unter einem Winkel von 90° zu der Abstützung 15 angeordneten Stützstempel 35 verwirklicht werden kann. Die Stützeinrichtung muß in diesem Fall nicht unter 90° stehen, sondern kann irgendeinen Winkel zu der Abstützung 15 und der Kraftaufbringungseinrichtung 45 einnehmen, der gegenüber der Abstützung 15 und der Kraftausübungseinrichtung 45 konstruktiv möglich ist. Die Kraftausübungseinrichutng 45 muß allerdings der Abstützung 15 immer genau gegenüberliegen.

Wenn die Walze 50 in die die Ständer 42 umfassende Schleifbank eingesetzt ist, werden die im Betrieb für die Linienkraft sorgenden, in der Zeichnung strichpunktiert nur angedeuteten Stützelemente 35 eingefahren, bis sie vom Innenumfang 7 des Walzenrohres 10 freigekommen sind. Durch Betätigung der Kraftausübungseinrichtung 45, wenn diese separat vorhanden ist, bzw. der Stützelemente 40, wenn diese zugleich die Kraftausübungseinrichtung bilden, wird dann das Walzenrohr 10 in der Zeichnung nach links verlagert, bis das Walzenrohr 10 an der Abstützung 15 anliegt und die Achsen A des Walzenrohres 10 und B des Querhauptes sich nicht mehr decken, sondern um einen Betrag C seitlich gegeneinander versetzt sind. Um diese Versetzung zustande zu bringen, haben die Stützelemente 40 den bereits erwähnten entsprechend großen Hub. Das Walzenrohr 10 liegt dann an der Abstützung 15 und den gegenüberliegenden Stützelementen 40 an und ist somit bei seiner Drehung pendelfrei geführt, so daß sich beim Passieren des Spalts zwischen der Schleifscheibe 3 und der Abstützung ein sauberer Schliff ohne Dickenschwankungen einstellt. Nach der Beendigung des Schliffs werden Walzenrohr 10 und Querhaupt 5 unter Einfahren der Stützstempel 40 wieder zentriert, wobei die Bemessung so getroffen ist, daß bei der im Betrieb der Walze 50 unter der Kraft der Stützstempel 40 bzw. 35 eintretenden Durchbiegung des Querhauptes 5 keine Berührung der Elemente 9 und 22 und des Innenumfangs 7 des Walzenrohres 10 eintritt.

Außer dem Gewinn an Präzision beim Schleifen eines dünnwandigen Walzenrohres, ist der Gewinn an Arbeitszeit für das Schleifen bzw. Nachschleifen von großer Bedeutung, der sich ergibt, weil eine fertige Walze 50 ohne Demontage in die Schleifbank eingesetzt und geschliffen bzw. nachgeschliffen werden kann.

## Patentansprüche

1. Verfahren zum Außenrundschleifen dünnwandiger Rohre (10, 10') größeren Durchmessers, insbesondere von Walzenrohren, bei welchem das um seine Achse (A) umlaufende Rohr (10, 10') auf der dem außen angreifenden formsteifen Schleifwerkzeug (20) gegenüberliegenden Seite der Rohrwandung von innen her gegen den Schleifdruck abgestützt wird.

2. Verfahren nach Anspruch 1, dadurch gekennzeichnet, daß das Rohr (10') während des Schleifvorgangs in Längsrichtung zwischen der Abstützung (15) und dem Schleifwerkzeug (20) hindurch geführt wird.

3. Verfahren nach Anspruch 1 zum Außenrundschleifen des Walzenrohres (10) einer durchbiegungssteuerbaren Walze (50) mit undrehbaren Querhaupt (5), um welches das Walzenrohr (10) um seine Längsachse (A) umläuft, bei welchem die Walze (50) in betriebsfähig montiertem Zustand auf ihren Außenumfang geschliffen und das Schleifwerkzeug (20) beim Schliff entlang der Walze (50) verlagert wird.

4. Verfahren nach einem der Ansprüche 1 bis 3, dadurch gekennzeichnet, daß das Rohr (10,10') beim Schleifen gegen die Abstützung (15) angezogen wird.

5. Verfahren nach Anspruch 3 und 4, dadurch gekennzeichnet, daß zum Anziehen des Walzenrohres (10) gegen die Abstützung (15) die gleiche Stützeinrichtung verwendet wird, mittels derer das Walzenrohr (10) im Betrieb der Walze (50) gegen die Linienkraft abgestützt wird und die um 180° in Umfangsrichtung gegenüber der Abstützung (15) versetzt angeordnet ist.

6. Verfahren nach Anspruch 3 und 4, dadurch gekennzeichnet, daß zum Anziehen des Walzenrohres (10) gegen die Abstützung (15) eine eigens hierfür vorgesehene kraftausübungseinrichtung (45) verwendet wird, die um 180° in Umfangsrichtung gegenüber der Abstützung (15) versetzt ist, während die Stützeinrichtung mittels derer das Walzenrohr (10) im Betrieb der Walze (50) gegen die Linienkraft abgestützt wird, um einen von 180° verschiedenen Winkel gegenüber der Abstützung (15) in Umfangsrichtung versetzt ist.

7. Vorrichtung zum Außenrundschleifen eines dünnwandigen Rohres (10, 10') größeren Durchmessers mittels eines außerhalb des Rohres (10, 10') angeordneten, an diesem außen angreifenden formsteifen Schleifwerkzeugs (20),
dadurch gekennzeichnet,
daß im Inneren des Rohres (10, 10') auf der dem Schleifwerkzeug (20) gegenüberliegenden Seite der Rohrwandung eine feststehende Abstützung (15) vorgesehen ist, an der das um seine Achse umlaufende Rohr (10) unter dem von außen einwirkenden Schleifdruck anliegt.

8. Vorrichtung nach Anspruch 7, dadurch gekennzeichnet, daß die Abstützung (15) an einem das Rohr (10) der Länge nach durchgreifenden undrehbaren Querhaupt (5) angeordnet ist.

9. Vorrichtung nach Anspruch 7 oder 8, dadurch gekennzeichnet, daß das Querhaupt (5'') mindestens die doppelte Länge des Rohres (10') hat und ein Antrieb vorgesehen ist, mittels dessen das Rohr (10') während des Schleifvorgangs in Längsrichtung des Rohres (10') zwischen dem in Längsrichtung feststehenden Schleifwerkzeug (20) und der feststehenden Abstützung (15') hindurch über seine ganze Länge verlagerbar ist.

10. Vorrichtung nach Anspruch 7 oder 8, dadurch gekennzeichnet, daß sich das Querhaupt (5) und die Abstützung (15) über die Länge des Rohres (10) erstrecken.

11. Vorrichtung nach Anspruch 10, dadurch gekennzeichnet, daß die Vorrichtung (100) den Aufbau einer üblichen Schleifbank zum Außenrundschleifen größerer Werkstücke aufweist, bei der eine umlaufendes Schleifwerkzeug (20) auf einem Support parallel zur Achse des Werkstücks entlang dem Werkstück verlagerbar ist,
daß das Rohr (10) das Walzenrohr einer durchbiegungssteuerbaren Walze (50) ist und
daß die Walze (50) in betriebsbereit montiertem Zustand in die Vorrichtung (100) einsetzbar ist.

12. Durchbiegungssteuerbare Walze (50) zur Druckbehandlung einer Bahn aus Papier, Vlies, Textil, Kunststoffolien, Blech und dergleichen
mit einer im Betrieb umlaufenden, den arbeitenden Walzenumfang bildenden Walzenrohr (10)
mit einem das Walzenrohr (10) der Länge nach durchgreifenden undrehbaren, ringsum radialen Abstand zum Innenumfang (7) des Walzenrohres (10) belassenden, an den Enden an äußeren Abstützungen abstützbaren Querhaupt (5)
und mit einer an dem Querhaupt (5) angeordneten, in Richtung des Walzspalts gegen den Innenumfang des Walzenrohres (10) wirkenden Stützeinrichtungen (35), mittels derer im Walzspalt die Linienkraft erzeugbar ist,
dadurch gekennzeichnet,
daß an dem Querhaupt (5) im Inneren des Walzenrohres (10) eine gegenüber der Stützeinrichtung (35) in Umfangsrichtung versetzte Abstützung (15) vorgesehen ist, an der das um seine Achse (A) umlaufende Walzenrohr (10) unter dem von außen wirkenden Schleifdruck (K) anliegt.

13. Vorrichtung oder Walze nach einem der Ansprüche 6 bis 12, dadurch gekennzeichnet, daß die Abstützung (15) durch einen an dem Querhaupt (5) angeordneten Gleitschuh (9) gebildet ist.

14. Vorrichtung oder Walze nach einem der Ansprüche 6 bis 12, dadurch gekennzeichnet, daß die Abstützung (15) durch mindestens eine an dem Querhaupt (5) angeordnete, um eine zur Rohrachse parallele Achse umlaufende Rolle gebildet ist.

15. Vorrichtung oder Walze nach einem der Ansprüche 7 bis 14, dadurch gekennzeichnet, daß auf der der Abstützung (15) gegenüberliegenden Seite - gegenüber der Abstützung in Umfangsrichtung um 180° versetzt - an dem Querhaupt (5) mindestens eine gegen den Innenumfang (7) des Rohres (10) wirkende Kraftausübungseinrichtung (45) vorgesehen ist, mittels derer das Rohr (10) gegen die Abstützung (15) ziehbar ist.

16. Vorrichtung oder Walze nach Anspruch 15, dadurch gekennzeichnet, daß die Kraftausübungseinrichtung mittels eines fluiden Druckmediums betätigbar ist.

17. Vorrichtung oder Walze nach Anspruch 16, dadurch gekennzeichnet, daß die Kraftausübungseinrichtung mindestens einen hydrostatischen Stützstempel (40) umfaßt, der mit einer mit mindestens einer hydrostatischen Lagertasche (24) versehenen Gleitfläche (23) gegen den Innenumfang (7) des Rohres (10) anliegt.

18. Vorrichtung oder Walze nach Anspruch 17, dadurch gekennzeichnet, daß die Kraftausübungseinrichtung durch die gleiche Stützeinrichtung (40, 40,...) gebildet ist, mittels derer das Walzenrohr (10) im Betrieb der Walze (50) gegen die Linienkraft abgestützt wird und die um 180° in Umfangsrichtung gegenüber der Abstützung (15) versetzt angeordnet ist.

19. Vorrichtung oder Walze nach Anspruch 18, dadurch gekennzeichnet, daß während der Schleifphase mittels der Kraftausübungseinrichtung das Querhaupt (5) gegenüber dem Rohr (10) quer zu dessen Längsachse (A) bis zur Anlage der Abstützung (15) am Innenumfang (7) des Rohres (10) verlagerbar und die Kraftausübungseinrichtung während des Walzbetriebs so weit einfahrbar ist, daß sich die Achsen (A,B) des Rohres (10) und des Querhauptes im wesentlichen decken und die Abstützung (15) Abstand zum Innenumfang (7) des Rohres (10) beläßt.

20. Vorrichtung oder Walze nach Anspruch 17, dadurch gekennzeichnet, daß die Kraftausübungseinrichtung (45) von der Stützeinrichtung (40, 40,...) separat ausgebildet und die Stützeirichtung (40, 40,...) um einen von 180° verschiedenen Winkel gegenüber der Abstützung (15) in Umfangsrichtung versetzt ist.

21. Vorrichtung oder Walze nach einem der Ansprüche 11 bis 20, dadurch gekennzeichnet, daß zum Drehantrieb des Walzenrohres (10) beim Schleifen ein Riemenantrieb mit einem außen um ein Ende (36) des Walzenrohres (10) geschlungenen Riemen (34) vorgesehen ist.
